# EUROPÄISCHE PATENTSCHRIFT

(11) **EP 3 974 089 B1**
(45) Veröffentlichungstag und Bekanntmachung des Hinweises auf die Patenterteilung: **07.06.2023**
(21) Anmeldenummer: 20197923.4
(22) Anmeldetag: 23.09.2020
(51) Int. Cl.: B23D 63/12, B23D 61/12

(54) **VORRICHTUNG UND VERFAHREN ZUM SCHÄRFEN VON DOPPELSEITIG SCHNEIDENDEN BANDSÄGEBLÄTTERN**
DEVICE AND METHOD FOR SHARPENING BANDSAW BLADES WHICH CUT ON BOTH SIDES
DISPOSITIF ET PROCÉDÉ D'AFFÛTAGE DE LAMES DE SCIE À RUBAN DOUBLE FACE

(43) Veröffentlichungstag der Anmeldung: 30.03.2022
(73) Patentinhaber: Kohlbacher GmbH, 83483 Bischofswiesen (DE)
(72) Erfinder: Kohlbacher, Siegfried, 83483 Bischofswiesen (DE)
(74) Vertreter: Naessens, Stephan

(56) Entgegenhaltungen:
- AT-B- 183 942
- CH-A- 316 478
- DE-A1-102013 005 593
- DE-B- 1 125 803
- US-A1- 2002 078 796

## Beschreibung

Die vorliegende Erfindung betrifft eine Vorrichtung und ein Verfahren zum Schärfen von doppelseitig schneidenden Bandsägeblättern.

Aus der Druckschrift DE 11 25 803 B ist eine Schleifmaschine bekannt, bei der der Schleifscheibenträger um eine zur Rotationsachse senkrecht stehende Schwenkachse schwenkbar ist, die um eine senkrecht stehende Schwenkachse schwenkbar ist, die um eine sie senkrecht schneidende Schwenkachse schwenkbar ist, die um eine zu ihr senkrecht stehende Achse kippbar ist, wobei der Schleifscheibenträger in Richtung der zweitgenannten Achse verschiebbar ist. Hierbei geht die zuerst genannte Schwenkachse durch den Schwerpunkt der Schleifscheibe, die in Richtung ihrer Rotationsachse verschiebbar. Hierdurch wird erreicht, dass sich der Angriffspunkt der Schleifscheibe beim Drehen derselben um die beiden erstgenannten Achsen auf einer vollen Kugelfläche und der Mittelpunkt dieser Kugel längst einer geraden bewegen kann. Diese Bewegbarkeit der Schleifscheibe in Richtung ihrer Rotationsachse gestattet eine Feinsteinstellung beim Abschliff.

Beispielsweise aus der Druckschrift DE 10 2013 005 593 A1 ist eine Vorrichtung zur Bearbeiten von lang gestreckten Sägewerkzeugen bekannt. Die Vorrichtung umfasst eine Basis, welche ein langgestrecktes Maschinenbett und eine Fixiervorrichtung aufweist, die dazu ausgebildet ist, das zu bearbeitende Sägewerkzeug relativ zum Maschinenbett zu fixieren. Ferner ist ein Bearbeitungskopf mit einer Rotationsachse und einer Hubachse zum Höhenverstellen des Rotationswerkzeuges relativ zum Maschinenbett vorgesehen.

Die bekannte Vorrichtung dient zum Schärfen von einseitig schneidenden Bandsägeblättern. Wenn doppelseitig scheidende Bandsägeblätter mit Sägezähnen an beiden einander gegenüberliegenden Stirnseiten geschärft werden sollen, ist es erforderlich zwei derartige Vorrichtungen zu verwenden, wobei die Bearbeitungsköpfe entsprechend unterschiedlich ausgerichtet sind. Dies ist sehr kostenintensiv.

Eine andere Möglichkeit um doppelseitig schneidende Bandsägeblättern mit nur einer derartigen Vorrichtung zu schärfen, ist nur möglich, wenn das Bandsägeblattes nach dem Schärfen der Sägezähne an einer ersten Stirnseite aus der Vorrichtung entfernt wird und in sich gedreht wird. Das Insichdrehen bei einem derartigen Bandsägeblattes ist höchst gefährlich, da das Bandsägeblattes eine hohe Steifigkeit aufweist und somit entsprechend hohe Kräfte zum Insichdrehen erforderlich sind, wobei dabei die Gefahr besteht, dass sich das Bandsägeblattes plötzlich entspannt und Verletzungen bei der Person hervorrufen kann.

Der vorliegenden Erfindung liegt die Aufgabe zugrunde eine Vorrichtung und ein Verfahren der eingangs beschriebenen Gattung vorzuschlagen, mit denen besonders einfach und kostengünstig beidseitig schneidende Bandsägeblättern geschärft werden können.

Diese Aufgabe wird erfindungsgemäß durch die Merkmale des Patentanspruchs 1 bzw. 7 gelöst. Vorteilhafte und beanspruchte Weiterbildungen ergeben sich aus dem jeweiligen Unteransprüchen und der Beschreibung sowie den Zeichnungen.

Somit wird eine Vorrichtung zum Schärfen von doppelseitig schneidenden Bandsägeblättern vorgeschlagen. Die Vorrichtung bzw. die Schärfmaschine umfasst ein Maschinenbett mit einer Spanneinrichtung zum senkrecht stehenden und horizontal umlaufenden Aufnehmen eines geschlossenen endlosen Bandsägeblattes. Ferner ist ein höhenverstellbarer Schleifkopf als Rotationswerkzeug mit einer angetriebenen Schleifscheibe mit einer vorbestimmten Schleifscheibenseite zum Schärfen der an einander gegenüberliegenden Stirnseiten angeordneten Sägezähnen des Bandsägeblattes vorgesehen. Zudem ist eine Vorschubeinrichtung zum Bewegen der Sägezähne des auf dem Maschinenbett befindlichen Bandsägeblattes zur vorbestimmten Schleifscheibenseite der Schleifscheibe vorgesehen. Um ein besonders kostengünstiges und einfaches Schärfen von doppelseitig schneidenden Bandsägeblättern zu realisieren, ist vorgesehen, dass der Schleifkopf derart schwenkbar um eine horizontal zum Maschinenbett ausgerichteten Schwenkachse und derart drehbar um eine senkrecht zum Maschinenbett ausgerichteten Drehachse angeordnet ist, dass die Schleifscheibe mit der vorbestimmten Schleifscheibenseite zum Schärfen der beidseitig an jeder Stirnseite an dem Bandsägeblatt angeordneten Sägezähne ausrichtbar ist.

Auf diese Weise können die Sägezähnen an beiden Stirnseiten eines Doppelschnitt-Bandsägeblattes geschärft bzw. geschliffen werden, ohne dass das Bandsägeblatt in sich gedreht werden muss oder zwei unterschiedlich eingestellte Vorrichtungen zum Schärfen notwendig sind. Dies wird erfindungsgemäß dadurch erreicht, dass der Schleifkopf des Rotationswerkzeug sowohl um eine horizontal zum Maschinenbett ausgerichtete Schwenkachse schwenkbar ist, um den vorbestimmten Schärfwinkel bzw. Spannwinkel bezogen auf die zu schärfenden Sägezähne des Doppelschnitt-Bandsägeblattes einstellen zu können als auch um eine etwa senkrecht zum Maschinenbett ausgerichtete Drehachse gedreht werden kann, um die in die andere Richtung ausgerichteten Sägezähnen an der zweiten Stirnseite des Bandsägeblattes entsprechend schärfen zu können. Diese beiden vorgenannten Freiheitsgrade hinsichtlich Drehbarkeit und Schwenkbarkeit des Schleifkopfes ermöglichen das Schärfen der Sägezähne an beiden Stirnseiten von doppelseitig schneidenden Bandsägeblättern mit nur einer Vorrichtung.

Die vorbeschriebenen Freiheitsgrade werden bei der vorgeschlagenen Vorrichtung im Rahmen einer bevorzugten Weiterbildung konstruktiv dadurch realisiert, dass der Schleifkopf an einer Grundplatte vorrichtungsseitig schwenkbar um die horizontale Schwenkachse zum Einstellen eines vorbestimmten Schärfwinkels gelagert ist und wobei der Schleifkopf um die senkrechte Drehachse zum Drehen des Schleifkopfes direkt oder indirekt an der Grundplatte gelagert ist. Somit ist der Schleifkopf vorrichtungsseitig entsprechend schwenkbar und drehbar zum Einstellen einer ersten und einer zweiten Schärfposition zum Schärfen sämtlicher Sägezähne des Doppelschnitt-Bandsägeblattes befestigt.

Eine besonders konstruktiv einfache Ausführung zur Halterung und Lagerung des Schleifkopfes wird dadurch realisiert, dass der Schleifkopf über einen Haltearm oder dergleichen an der Grundplatte befestigt ist, wobei der Schleifkopf über die senkrechte Drehachse zum Drehen des Schleifkopfes an dem Haltearm gelagert ist, wobei die parallel zur senkrechten Umlaufachse des Bandsägeblattes ausgerichtete Drehachse zum Drehen des Schleifkopfes an dem Haltearm gelagert ist. Auf diese Weise werden die notwendigen Freiheitsgrade für den Schleifkopf über den Haltearme und die Grundplatte vorrichtungsseitig besonders konstruktiv einfach und kostengünstig realisiert.

Um eine zum Schärfen der Sägezähne beider Stirnseiten eines Doppelschnitt-Bandsägeblattes geeigneten Anordnungsposition der Schleifkopfes zu schaffen, ist beispielsweise vorgesehen, dass die senkrecht ausgerichtete Grundplatte schwenkbar um die horizontale Schwenkachse an einer Vorrichtungswand oder dergleichen gelagert ist, wobei die Vorrichtungswand mit der Grundplatte im Inneren des horizontal umlaufenden Bandsägeblattes auf dem Maschinenbett angeordnet ist.

Hinsichtlich des Freiheitsgrades bezüglich der Drehbewegung des Schleifkopfes ist vorgesehen, dass der Schleifkopf um etwa 180° um die senkrechte Drehachse an dem Haltearm drehbar gelagert ist, um mit der Schleifscheibenseiten sowohl den Sägezähnen der ersten Stirnseite als auch den Sägezähnen der zweiten Stirnseite des Doppelschnitt- Bandsägeblattes zugestellt werden zu können.

Bezüglich des Freiheitsgrades des Schleifkopfes hinsichtlich der Schwenkbarkeit zum Einstellen des jeweiligen Schärf- oder Spannwinkels zum Schärfen der Sägezähne beider Stirnseiten ist vorgesehen, dass der Schleifkopf über die Grundplatte bezogen auf eine senkrecht ausgerichtete Schleifscheibenstellung des Schleifkopfes um etwa plus/minus 40° um die horizontale Schwenkachse schwenkbar ist. Somit kann ein Schwenkbereich der Grundplatte von zumindest etwa plus/minus 40° bezogen auf die senkrecht ausgerichtete Schleifscheibenstellung des Schleifkopfes realisiert werden.

Ein weiterer Aspekt der vorliegenden Erfindung sieht vor, dass ein Verfahren zum Schärfen von einem doppelseitig schneidenden Bandsägeblatt mit an einander gegenüberliegenden Stirnseiten vorgesehenen Sägezähnen mit nur einer Vorrichtung beansprucht wird, insbesondere wird vorbeschriebene Vorrichtung bei dem Verfahren verwendet. Hieraus ergeben sich die bereits beschriebenen und weitere Vorteile.

Im Rahmen des vorgeschlagenen Verfahrens wird vorgesehen, dass ein Schleifkopf der Vorrichtung in einen vorbestimmten Schärfwinkel bzw. Spannwinkel um eine etwa horizontal ausgerichteten Schwenkachse geschwenkt wird, um in der ersten Schärfposition die Sägezähne an einer ersten Stirnseite des Bandsägeblattes zu schärfen, in dem das Bandsägeblatt in eine erste Vorschubrichtung bewegt wird.

Zum Schärfen der Sägezähne an der zweiten Stirnseite des Doppelschnitt-Bandsägeblattes wird im Rahmen des vorgeschlagenen Verfahrens vorgeschlagen, dass das eingespannte Bandsägeblatt gelöst und gewendet sowie wieder eingespannt wird, dass der Schleifkopf um eine etwa senkrecht zum Maschinenbett ausgerichteten Drehachse um 180° gedreht wird, sodass die vorbestimmte Schleifscheibenseite der Schleifscheibe den Sägezähnen an der zweiten Stirnseite des Bandsägeblattes zugeordnet wird, dass der Schleifkopf um die horizontal ausgerichtete Schwenkachse geschwenkt wird, bis der vorbestimmte Schärfwinkel bzw. Spanwinkel eingestellt und die zweite Schärfposition erreicht ist, und dass das Bandsägeblattes in eine zweite Vorschubrichtung bewegt wird, um die Sägezähnen an der zweiten Stirnseite des Bandsägeblattes zu schärfen.

Nachfolgend wird die vorliegende Erfindung anhand der Zeichnungen weiter erläutert. Es zeigen:
Figur 1 eine schematische Seitenansicht einer möglichen Ausführungsvariante einer erfindungsgemäßen Vorrichtung beim Schärfen von Sägezähnen an einer ersten Stirnseite eines Doppelschnitt-Bandsägeblattes in einer ersten Schärfposition;
Figur 2 eine schematische Seitenansicht der erfindungsgemäßen Vorrichtung beim Schärfen von Sägezähnen an einer zweiten Stirnseite des Doppelschnitt-Bandsägeblattes in einer ersten Schärfposition;
Figur 3 eine schematische Draufsicht auf die erfindungsgemäße Vorrichtung beim Schärfen von Sägezähnen an der ersten Stirnseite des Doppel-Bandsägeblattes;
Figur 4 eine schematische Draufsicht auf die erfindungsgemäße Vorrichtung beim Schärfen von Sägezähnen an der zweiten Stirnseite des Doppel-Bandsägeblattes;
Figur 5 eine schematische Draufsicht auf die erfindungsgemäße Vorrichtung in einer Zwischenstellung einer Schleifscheibe eines Schleifkopfes der Vorrichtung beim Wechsel zwischen den Schärfpositionen;
Figur 6 eine Detailansicht des über einen Haltearm an einer Grundplatte schwenkbar und drehbar befestigten Schleifkopfes der erfindungsgemäßen Vorrichtung; und
Figur 7 eine geschnittene Ansicht entlang der Schnittlinie A-A gemäß Figur 6.

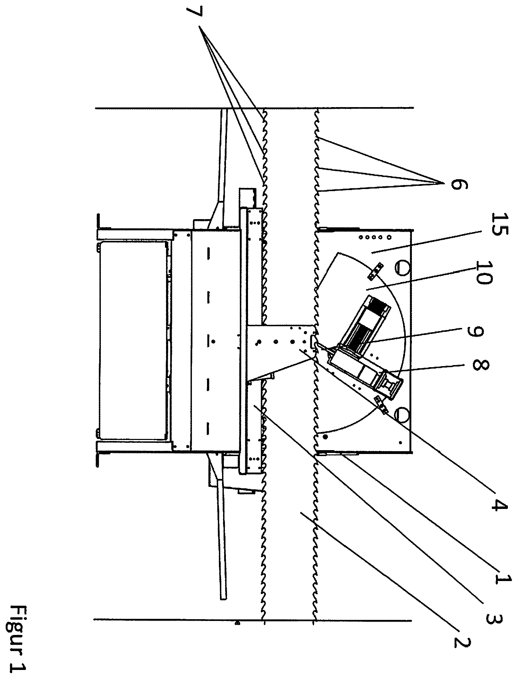

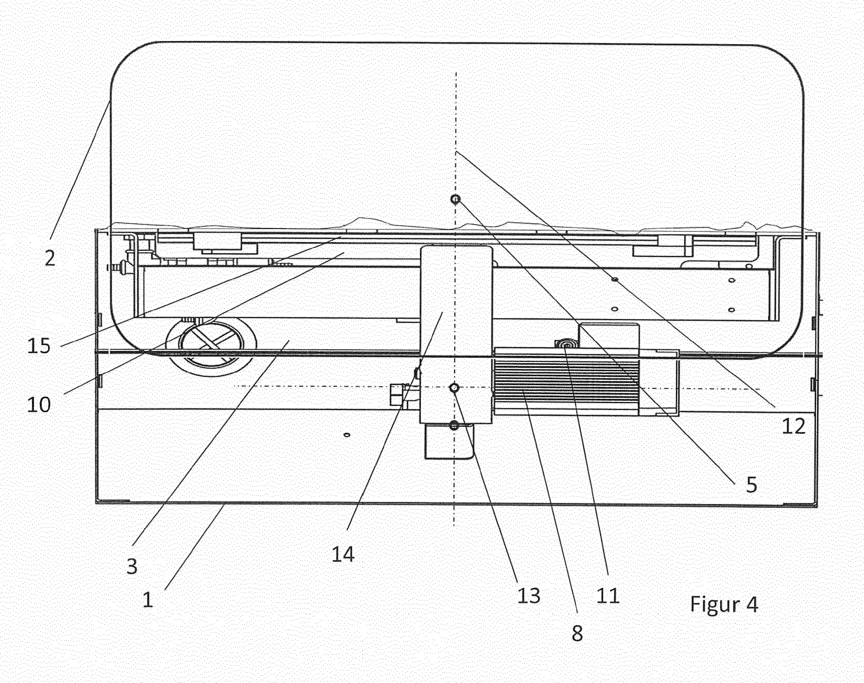

In den Figuren 1 bis 7 sind verschiedene Ansichten einer erfindungsgemäßen Vorrichtung bzw. Schärfmaschine 1 zum Schärfen von doppelseitigen schneidenden bzw. Doppelschnitt-Bandsägeblättern 2 beispielhaft dargestellt.

Die Vorrichtung bzw. die Schärfmaschine 1 weist ein Maschinenbett 3 mit einer Spanneinrichtung 4 zum senkrecht stehenden und horizontal umlaufenden Aufnehmen des Bandsägeblattes 2 um eine gedachte vertikal zum Maschinenbett 3 ausgerichtete Umlaufachse 5 auf. Als Rotationswerkzeug zum Schärfen der Sägezähne 6 an einer ersten Stirnseite des Bandsägeblattes 2 und der Sägezähne 7 an einer zweiten Stirnseite des Bandsägeblattes 2 ist ein Schleifkopf 8 mit einer angetriebenen Schleifscheibe 9 mit einer bestimmten den Sägezähnen 6, 7 zuzuordnenden Schleifscheibenseite zum Schärfen der an einander gegenüberliegenden Stirnseiten angeordneten Sägezähnen 6, 7 des Bandsägeblattes 2 vorgesehen. Ferner ist eine Vorschubeinrichtung 11 vorgesehen, mit der die Sägezähne 6, 7 des Bandsägeblattes 2 zur vorbestimmten Schleifscheibenseite der Schleifscheibe 9 bewegt bzw. zugestellt werden. Um die Sägezähne 6, 7 zum Schärfen zu erreichen, ist der Schleifkopf höhenverstellbar in Bezug auf das Maschinenbett 3 gelagert, welches der Einfachheit halber nicht weiter dargestellt ist.

Um das Schärfen der Sägezähnen 6, 7 an beiden Stirnseiten des Doppelschnitt-Bandsägeblattes 2 möglichst einfach und sicher sowie kostengünstig mit nur einer Vorrichtung zu realisieren, ist vorgesehen, dass der Schleifkopf 8 derart schwenkbar und drehbar gelagert ist, dass die Schleifscheibe 9 mit ihrer vorbestimmten Schleifscheibenseite zum Schärfen der beidseitig an jeder Stirnseite an dem Doppelschnitt-Bandsägeblattes 2 angeordneten Sägezähnen 6, 7 ausrichtbar ist. Dies wird dadurch erreicht, dass der Schleifkopf 8 schwenkbar um eine horizontal zum Maschinenbett 3 ausgerichteten Schwenkachse und der drehbar um eine senkrecht zum Maschinenbett ausgerichteten Drehachse angeordnet bzw. gelagert ist,

Beispielsweise in Figur 1 bis 5 sind die verschiedenen Stellungen bzw. Schärfpositionen des Schleifkopfes 8 der erfindungsgemäßen Vorrichtung dargestellt, um die Sägezähne 6, 7 des Doppelschnitt-Bandsägeblattes 2 zu schärfen. Der höhenverstellbare Schleifkopf 8 ist an einer vorrichtungsseitig schwenkbar gelagerten Grundplatte 10 um eine bezogen auf die vertikal ausgerichtete Umlaufachse 5 des Bandsägeblattes auf dem Maschinenbett 3 horizontal ausgerichtete Schwenkachse 12 zum Einstellen eines vorbestimmten Schärf-bzw. Spannwinkels schwenkbar vorrichtungsseitig gelagert. Ein weiterer Freiheitsgrad des Schleifkopfes 8 wird dadurch realisiert, dass der Schleifkopf 8 um eine parallel zur gedachten Umlaufachse 5 des Bandsägeblattes 2 senkrecht zum Maschinenbett 3 ausgerichtete Drehachse 13 zum Drehen des Schleifkopfes 8 gelagert ist.

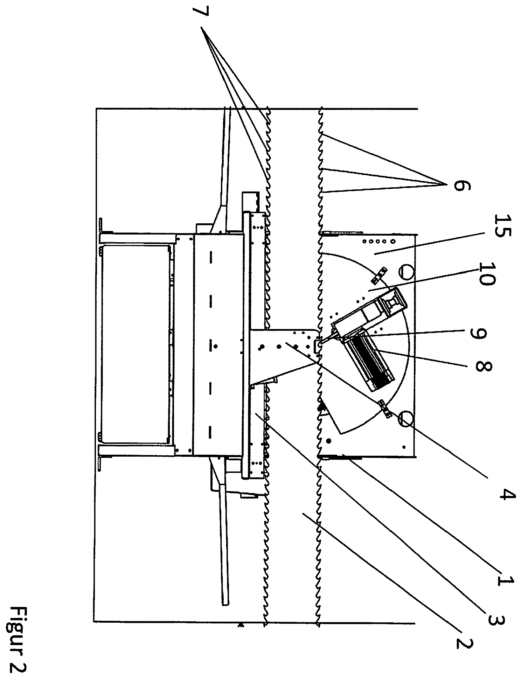

Die Schwenkbewegung des Schleifkopfes 8 zum Einstellen des Schärf-bzw. Spannwinkels ist insbesondere in den Figuren 1 und 2 ersichtlich, wobei beispielhaft ein Schwenkbereich von plus-minus 40° bezogen auf die 0° Zwischenstellung des Schleifkopf 8 bzw. der Schleifscheibe 9 zwischen den beiden Schärfpositionen zum Schärfen der an beiden Stirnseiten des Bandsägeblattes 2 angeordneten Sägezähne 6, 7 dargestellt ist.

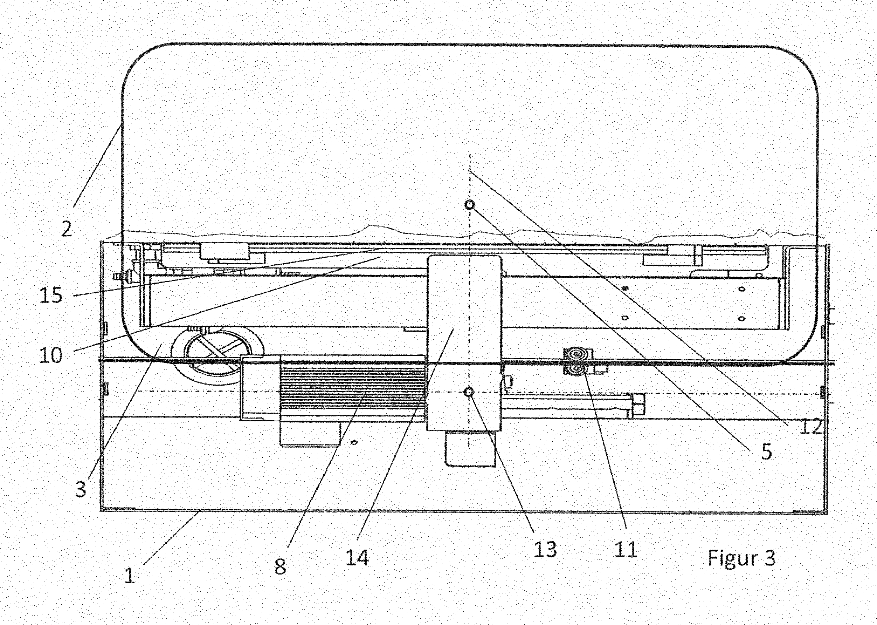

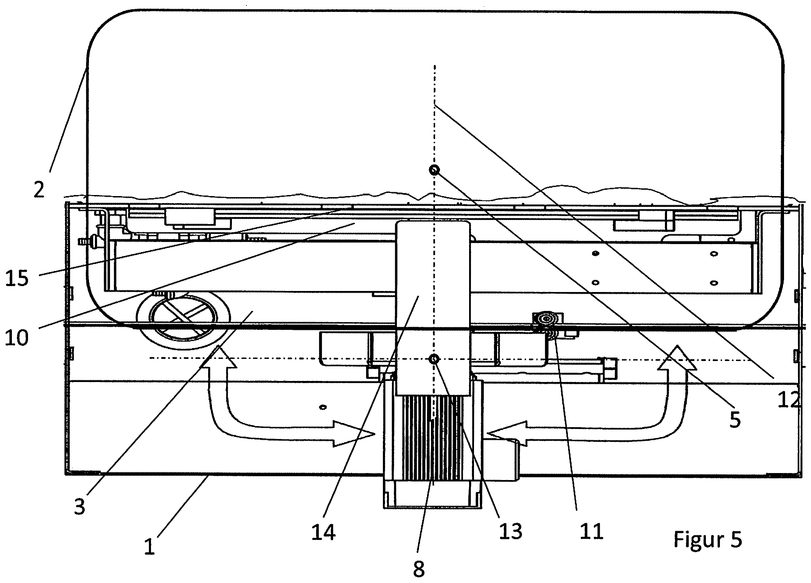

Die Drehbewegung der Schleifkopfes 8 ist beispielsweise aus den Figuren 3 bis 5 ersichtlich, wobei beispielhaft ein Drehbereich von 180° des Schreibkopfes 8 dargestellt ist, wobei das umlaufende Bandsägeblatt 2 mit der gedachten Umlaufachse 4 vollständig und das das Bandsägeblatt 2 aufnehmende Maschinenbett 3 der Vorrichtung 1 der Einfachheit halber nur etwa halb gezeigt ist. In Figur 5 ist die 180° Drehbewegung des Schleifkopfes 8 mittels Pfeilen um die senkrechte Drehachse 13 angedeutet.

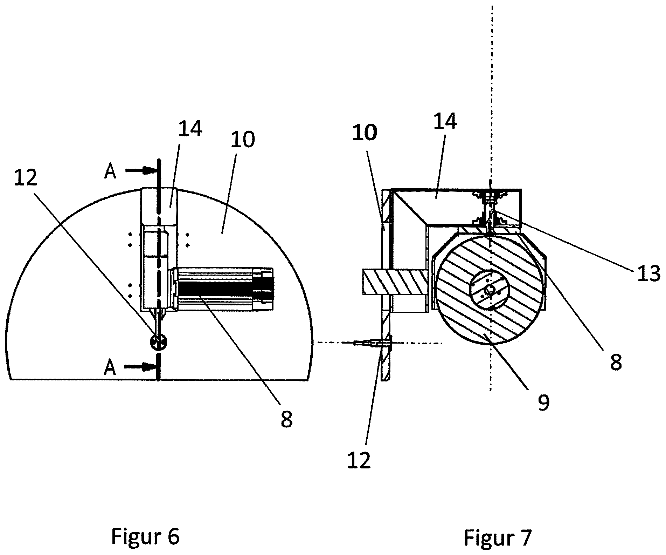

Insbesondere aus den Figuren 6 und 7 ist ersichtlich, dass der Schleifkopf 8 über einen Haltearm 14 an der Grundplatte 10 befestigt ist, wobei die parallel zur Umlaufachse 5 des Bandsägeblattes 2 senkrecht zum Maschinenbett 3 ausgerichtete Drehachse 13 zum Drehen des Schleifkopfes 8 an dem Haltearm 14 gelagert ist. Die schwenkbare Grundplatte 10 ist über die horizontal zum Maschinenbett 3 ausgerichtete Schwenkachse 12 an einer Vorrichtungswand 15 gelagert, wobei die Vorrichtungswand 15 mit der Grundplatte 10 im Inneren des vertikal stehend umlaufenden Bandsägeblattes 2 auf dem Maschinenbett 3 angeordnet ist. Somit bewegt sich das Bandsägeblatt 2 um die Grundplatte 10 bzw. um den Schleifkopf 8, welches sich insbesondere aus Figuren 3 bis 5 ergibt.

Das ebenfalls beanspruchte Verfahren zum Schärfen des Doppelschnitt-Bandsägeblattes 2 mit der vorbeschriebenen Vorrichtung wird wie folgt durchgeführt:
Im Rahmen des Verfahrens ist vorgesehen, dass der Schleifkopf 8 der Vorrichtung 1 in einem vorbestimmten Schärf- bzw. Spannwinkel um eine etwa horizontal ausgerichtete Schwenkachse 12 geschwenkt wird, um die erste Schärfposition zum Schärfen der Sägezähne 6 an der ersten Stirnseite des Bandsägeblattes 2 einzunehmen, wobei das Bandsägeblatt 2 in eine erste Zustell- bzw. Vorschubrichtung bewegt wird. Dies ist insbesondere in Figur 1 angedeutet.

Nachdem die Sägezähne 6 an der ersten Stirnseite des Doppelschnitt-Bandsägeblattes 2 geschärft sind, wird das in der Vorrichtung 1 eingespannte Bandsägeblatt 2 gelöst und gewendet sowie wieder in die gleiche Vorrichtung 1 eingespannt. Das gewendete Bandsägeblatt 2 in der Vorrichtung 1 ist in Figur 2 dargestellt.

Der Schleifkopf 8 wird anschließend um die etwa senkrecht zum Maschinenbett 3 ausgerichtete Drehachse 13 um 180° gedreht, sodass die vorbestimmte Schleifscheibenseite der Schleifscheibe 8 den Sägezähnen 7 an der zweiten Stirnseite des gewendeten Bandsägeblattes 2 zugeordnet wird. Der Schleifkopf 8 wird zudem um die horizontal ausgerichtete Schwenkachse 12 geschwenkt, bis der vorbestimmte Schärfwinkel bzw. Spannwinkel eingestellt ist und die zweite Schärfposition erreicht ist. Schließlich wird das Bandsägeblatt 2 in eine zweite Zustell- bzw. Vorschubrichtung bewegt, um die Sägezähne 7 an der zweiten Stirnseite des Bandsägeblattes 2 zu schärfen. Auf diese Weise werden sämtliche Sägezähne 6, 7 des Doppelschnitt-Bandsägeblattes 2 im Rahmen des Verfahrens mit nur einer Vorrichtung 1 geschärft.

### Bezugszeichen

- 1: Vorrichtung
- 2: Bandsägeblatt
- 3: Maschinenbett
- 4: Halte- bzw. Spanneinrichtung
- 5: Umlaufachse
- 6: Sägezähne an der ersten Stirnseite des Doppelschnitt Bandsägeblattes
- 7: Sägezähne an der zweiten Stirnseite des Doppelschnitt Bandsägeblattes
- 8: Schleifkopf
- 9: Schleifscheibe
- 10: Grundplatte
- 11: Vorschubeinrichtung
- 12: horizontal ausgerichtete Schwenkachse
- 13: senkrecht ausgerichtete Drehachse
- 14: Haltearm
- 15: Vorrichtungswand

## Patentansprüche

1. Vorrichtung (1) zum Schärfen eines doppelseitig schneidenden Bandsägeblattes (2), mit einem Maschinenbett (3) zum Aufnehmen des Bandsägeblattes (2), mit einer Halteeinrichtung (4) zur senkrecht stehenden und horizontal umlaufenden Anordnung des Bandsägeblattes (2), mit einem höhenverstellbaren Schleifkopf (8) mit einer angetriebenen Schleifscheibe (9) zum Schärfen von Sägezähnen (6, 7) des Bandsägeblattes (2) und mit einer Vorschubeinrichtung (11) zum Bewegen der zu schärfenden Sägezähne (6, 7) des Bandsägeblattes (2) in eine erste Vorschubrichtung zum Schärfen der Sägezähne (6) an einer ersten Stirnseite des doppelseitig schneidenden Bandsägeblattes (2) und zum Bewegen der zu schärfenden Sägezähne (6, 7) des Bandsägeblattes (2) in eine zweite Verschubrichtung zum Schärfen der Sägezähne (7) an einer der ersten gegenüberliegenden zweiten Stirnseite des doppelseitig schneidenden Bandsägeblattes (2), wobei der Schleifkopf (8) derart schwenkbar um eine horizontal zum Maschinenbett (3) ausgerichteten Schwenkachse (12) und derart drehbar um eine senkrecht zum Maschinenbett (3) ausgerichteten Drehachse (13) angeordnet ist und wobei die Schleifscheibe (9) mit einer vorbestimmten Schleifscheibenseite zum Schärfen der beidseitig an jeder Stirnseite an dem Bandsägeblatt (2) angeordneten Sägezähne (6, 7) ausrichtbar ist.

2. Vorrichtung (1) nach Anspruch 1, **dadurch gekennzeichnet, dass** der Schleifkopf (8) an einer Grundplatte (10) vorrichtungsseitig schwenkbar um die horizontale Schwenkachse (12) zum Einstellen eines vorbestimmten Schärfwinkels gelagert ist und wobei der Schleifkopf (8) um die senkrechte Drehachse (13) zum Drehen des Schleifkopfes (8) direkt oder indirekt an der Grundplatte (10) gelagert ist.

3. Vorrichtung (1) nach Anspruch 2, **dadurch gekennzeichnet, dass** der Schleifkopf (8) über einen Haltearm (14) an der Grundplatte (10) befestigt ist, wobei der Schleifkopf (8) über die senkrechte Drehachse (13) zum Drehen des Schleifkopfes (8) an dem Haltearm (14) gelagert ist.

4. Vorrichtung (1) nach Anspruch 2 oder 3, **dadurch gekennzeichnet, dass** die senkrecht zum Maschinenbett (3) ausgerichtete Grundplatte (10) schwenkbar um die horizontale Schwenkachse (12) an einer Vorrichtungswand (15) gelagert ist, wobei die Vorrichtungswand (15) mit der Grundplatte (10) im Inneren des umlaufenden Bandsägeblattes (2) auf dem Maschinenbett (3) angeordnet ist.

5. Vorrichtung (1) nach einem der Ansprüche 2 bis 4, **dadurch gekennzeichnet, dass** der Schleifkopf (8) um 180° um die senkrechte Drehachse (13) an dem Haltearm (14) drehbar gelagert ist.

6. Vorrichtung (1) nach einem der Ansprüche 2 bis 5, **dadurch gekennzeichnet, dass** der Schleifkopf (8) über die Grundplatte (10) bezogen auf eine senkrecht ausgerichtete Schärfposition des Schleifkopfes (8) um etwa plus/minus 40° um die horizontale Schwenkachse (12) schwenkbar ist.

7. Verfahren zum Schärfen von einem doppelseitig schneidenden Bandsägeblatt (2) mit an einander gegenüberliegenden Stirnseiten vorgesehenen Sägezähnen (6, 7) mit nur einer Vorrichtung (1) zum Schärfen nach einem der vorhergehenden Ansprüche

8. Verfahren nach Anspruch 7, **dadurch gekennzeichnet, dass** ein Schleifkopf (8) der Vorrichtung (1) in einen vorbestimmten Schärfwinkel um eine etwa horizontal zum Maschinenbett (3) der Vorrichtung (1) ausgerichtete Schwenkachse (12) geschwenkt wird, um die erste Schärfposition zum Schärfen der Sägezähne (6) an der ersten Stirnseite des Bandsägeblattes (2) einzunehmen, wobei das Bandsägeblatt (2) in eine erste Vorschubrichtung bewegt wird.

9. Verfahren nach Anspruch 8 oder 9, **dadurch gekennzeichnet, dass** das eingespannte Bandsägeblatt (2) gelöst und gewendet sowie wieder eingespannt wird, dass der Schleifkopf (8) um eine etwa senkrecht zum Maschinenbett (3) der Vorrichtung (1) ausgerichtete Drehachse (13) um 180° gedreht wird, sodass die vorbestimmte Schleifscheibenseite der Schleifscheibe (9) den Sägezähnen (7) an der zweiten Stirnseite des Bandsägeblattes (2) zugeordnet wird, dass der Schleifkopf (8) um die horizontal ausgerichtete Schwenkachse (12) geschwenkt wird, bis der vorbestimmte Schärfwinkel eingestellt und eine zweite Schärfposition erreicht ist, und dass das Bandsägeblatt (2) in eine zweite Vorschubrichtung bewegt wird, um die Sägezähne (7) an der zweiten Stirnseite des Bandsägeblattes (2) zu schärfen.

## Claims

1. A device (1) for sharpening a bandsaw blade (2) which cuts on both sides, having a machine bed (3) for holding the bandsaw blade (2), having a holding apparatus (4) for the vertically standing and horizontally circulating arrangement of the bandsaw blade (2), having a height-adjustable grinding head (8) with a driven grinding disc (9) for sharpening saw teeth (6, 7) of the bandsaw blade (2), and having a feed apparatus (11) for moving the saw teeth (6, 7) to be sharpened of the bandsaw blade (2) in a first feed direction to sharpen the saw teeth (6) on a first edge of the bandsaw blade (2) which cuts on both sides and for moving the saw teeth (6, 7) to be sharpened of the bandsaw blade (2) in a second feed direction to sharpen the saw teeth (7) on a second edge, opposite the first, of the bandsaw blade (2) which cuts on both sides, wherein the grinding head (8) is arranged pivotably about a pivot axis (12) oriented horizontally to the machine bed (3) and rotatably about a rotational axis (13) oriented vertically to the machine bed (3), and wherein the grinding disc (9) can be oriented with a predefined grinding disc side to sharpen the saw teeth (6, 7) arranged on both sides on each edge of the bandsaw blade (2).

2. The device (1) according to Claim 1, **characterised in that** the grinding head (8) is mounted on the device side on a baseplate (10) pivotably about the horizontal pivot axis (12) to set a predefined sharpening angle, and wherein the grinding head (8) is mounted directly or indirectly on the baseplate (10) about the vertical rotational axis (13) for rotating the grinding head (8).

3. The device (1) according to Claim 2, **characterised in that** the grinding head (8) is fastened to the baseplate (10) via a holding arm (14), wherein the grinding head (8) is mounted on the holding arm (14) via the vertical rotational axis (13) for rotating the grinding head (8).

4. The device (1) according to Claim 2 or 3, **characterised in that** the baseplate (10) oriented vertically to the machine bed (3) is mounted on a device wall (15) pivotably about the horizontal pivot axis (12), wherein the device wall (15) is arranged with the baseplate (10) inside the circulating bandsaw blade (2) on the machine bed (3).

5. The device (1) according to one of Claims 2 to 4, **characterised in that** the grinding head (8) is mounted on the holding arm (14) rotatably by 180° about the vertical rotational axis (13).

6. The device (1) according to one of Claims 2 to 5, **characterised in that** the grinding head (8) is pivotable via the baseplate (10) by approximately plus/minus 40° about the horizontal pivot axis (12) in relation to a vertically oriented sharpening position of the grinding head (8).

7. A method for sharpening a bandsaw blade (2) which cuts on both sides with saw teeth (6, 7) provided on mutually opposing edges using only one device (1) for sharpening according to one of the preceding claims.

8. The method according to Claim 7, **characterised in that** a grinding head (8) of the device (1) is pivoted about a pivot axis (12) oriented approximately horizontally to the machine bed (3) of the device (1) into a predefined sharpening angle, in order to assume the first sharpening position for sharpening the saw teeth (6) on the first edge of the bandsaw blade (2), wherein the bandsaw blade (2) is moved in a first feed direction.

9. The method according to Claim 8 or 9, **characterised in that** the clamped bandsaw blade (2) is released and turned over and clamped in again, that the grinding head (8) is rotated by 180° about a rotational axis (13) oriented approximately vertically to the machine bed (3) of the device (1) so that the predefined grinding disc side of the grinding disc (9) is assigned to the saw teeth (7) on the second edge of the bandsaw blade (2), that the grinding head (8) is pivoted about the horizontally oriented pivot axis (12) until the predefined sharpening angle is set and a second sharpening position is reached, and that the bandsaw blade (2) is moved in a second feed direction in order to sharpen the saw teeth (7) on the second edge of the bandsaw blade (2).

## Revendications

1. Dispositif (1) pour affûter une lame de scie à ruban à double face de coupe (2), avec un socle de machine (3) pour recevoir la lame de scie à ruban (2), avec un mécanisme de maintien (4) pour la disposition perpendiculairement verticale et horizontalement périphérique de la lame de scie à ruban (2), avec une tête de meulage (8) réglable en hauteur avec un disque de meulage entraîné (9) pour affûter les dents de scie (6, 7) de la lame de scie à ruban (2) et avec un mécanisme d'avancement (11) pour déplacer les dents de scie à affûter (6, 7) de la lame de scie à ruban (2) dans une première direction d'avancement pour affûter les dents de scie (6) au niveau d'une première face frontale de la lame de scie à ruban à double face de coupe (2), et pour déplacer les dents de scie à affûter (6, 7) de la lame de scie à ruban (2) dans une deuxième direction d'avancement pour affûter les dents de scie (7) au niveau d'une deuxième face frontale opposée à la première de la lame de scie à ruban à double face de coupe (2), la tête de meulage (8) étant disposée de manière à pouvoir pivoter autour d'un axe de pivotement (12) orienté horizontalement par rapport au socle de machine (3) et à pouvoir tourner autour d'un axe de rotation (13) orienté perpendiculairement par rapport au socle de machine (3), et le disque de meulage (9) étant orientable avec un côté de disque de meulage prédéterminé pour affûter les dents de scie (6, 7) disposées sur les deux côtés au niveau de chaque face frontale au niveau de la lame de scie à ruban (2).

2. Dispositif (1) selon la revendication 1, **caractérisé en ce que** la tête de meulage (8) est logée au niveau d'une plaque d'assise (10) côté dispositif de manière pivotante autour de l'axe de pivotement horizontal (12) pour régler un angle d'affûtage prédéterminé et la tête de meulage (8) étant logée directement ou indirectement au niveau de la plaque d'assise (10) autour de l'axe de rotation vertical (13) pour faire tourner la tête de meulage (8).

3. Dispositif (1) selon la revendication 2, **caractérisé en ce que** la tête de meulage (8) est fixée à la plaque d'assise (10) par un bras de maintien (14), la tête de meulage (8) étant logée au niveau du bras de maintien (14) par l'axe de rotation vertical (13) pour faire tourner la tête de meulage (8).

4. Dispositif (1) selon la revendication 2 ou 3, **caractérisé en ce que** la plaque d'assise (10) orientée perpendiculairement par rapport au socle de machine (3) est logée de manière pivotante autour de l'axe de pivotement horizontal (12) au niveau d'une paroi du dispositif (15), la paroi du dispositif (15) étant disposée sur le socle de machine (3) avec la plaque d'assise (10) à l'intérieur de la lame de scie à ruban (2) périphérique.

5. Dispositif (1) selon l'une quelconque des revendications 2 à 4, **caractérisé en ce que** la tête de meulage (8) est logée au niveau du bras de maintien (14) de manière rotative sur 180° autour de l'axe de rotation vertical (13).

6. Dispositif (1) selon l'une quelconque des revendications 2 à 5, **caractérisé en ce que** la tête de meulage (8) par le biais de la plaque d'assise (10) peut pivoter autour de l'axe de pivotement horizontal (12) sur environ plus/moins 40° par rapport à une position d'affûtage orientée perpendiculairement de la tête de meulage (8).

7. Procédé d'affûtage d'une lame de scie à ruban à double face de coupe (2) avec des dents de scie (6, 7) prévues au niveau de faces frontales opposées avec un seul dispositif (1) d'affûtage selon l'une quelconque des revendications précédentes.

8. Procédé selon la revendication 7, **caractérisé en ce qu'**une tête de meulage (8) du dispositif (1) est pivotée dans un angle d'affûtage prédéterminé autour d'un axe de pivotement (12) orienté approximativement horizontalement par rapport au socle de machine (3) du dispositif (1) afin d'adopter la première position d'affûtage pour affûter les dents de scie (6) au niveau de la première face frontale de la lame de scie à ruban (2), la lame de scie à ruban (2) étant déplacée dans une première direction d'avancement.

9. Procédé selon la revendication 8 ou 9, **caractérisé en ce que** la lame de scie à ruban (2) montée est desserrée et retournée ainsi que remontée, **en ce que** la tête de meulage (8) est tournée sur 180° autour d'un axe de rotation (13) orienté approximativement perpendiculairement par rapport au socle de machine (3) du dispositif (1), de sorte que le côté de disque de meulage prédéterminé du disque de meulage (9) est associé aux dents de scie (7) au niveau de la deuxième face frontale de la lame de scie à ruban (2), **en ce que** la tête de meulage (8) est pivotée autour de l'axe de pivotement (12) orienté horizontalement jusqu'à ce que l'angle d'affûtage prédéterminé soit réglé et qu'une deuxième position d'affûtage soit atteinte, et **en ce que** la lame de scie à ruban (2) est déplacée dans une deuxième direction d'avancement pour affûter les dents de scie (7) au niveau de la deuxième face frontale de la lame de scie à ruban (2).
